# EUROPÄISCHE PATENTSCHRIFT

(11) **EP 3 156 280 B1**
(45) Veröffentlichungstag und Bekanntmachung des Hinweises auf die Patenterteilung: **06.11.2019**
(21) Anmeldenummer: 16190105.3
(22) Anmeldetag: 22.09.2016
(51) Int. Cl.: B60P 1/28, B60S 1/66

(54) **ANHÄNGER FÜR EINE ZUGMASCHINE**
TRAILER FOR A TRACTION MACHINE
REMORQUE DE TRACTEUR

(30) Priorität: 14.10.2015 DE 202015105447 U
(43) Veröffentlichungstag der Anmeldung: 19.04.2017
(73) Patentinhaber: TSS Trailer Spray Systems, 57482 Wenden (DE)
(72) Erfinder: Viol, Ralf, 57482 Wenden (DE)
(74) Vertreter: Grosse, Wolf-Dietrich Rüdiger

(56) Entgegenhaltungen:
- EP-A2- 1 340 669
- WO-A1-03/066395
- DE-U1-202014 105 617
- FR-A1- 2 919 831
- US-A- 3 188 238
- US-A1- 2009 126 481
- US-B1- 9 073 690

## Beschreibung

Die Erfindung betrifft einen Anhänger in Form eines Kippers für eine Zugmaschine. Bei dem Anhänger kann es sich beispielsweise um einen Kippauflieger, einen Walkinig-Floor-Anhänger, oder einen Auflieger mit geschlossenem Kastenaufbau handeln. Darüber hinaus betrifft die Anmeldung einen Lastkraftwagen, nachfolgend kurz "LKW" genannt, aufweisend eine Zugmaschine und den mit der Zugmaschine verbindbaren Anhänger. Bei dem LKW kann es sich auch um einen LKW mit Kastenaufbau handeln; der Anhänger ist dann quasi fest auf das Fahrzeuggestell der Zugmaschine montiert.

Anhänger in Form eines Kippers sind im Stand der Technik grundsätzlich bekannt. Sie weisen typischerweise ein Chassis sowie einen auf dem Chassis um eine Schwenkachse kippbar gelagerten Aufbau auf. Der Aufbau besteht bei dem Kipper typischerweise in Form einer Mulde, welche einen Laderaum aufspannt zur Aufnahme von Schüttgut.

Ausgangspunkt für die vorliegende Erfindung war ein solcher Anhänger in Form eines Kippers, insbesondere zum Transport von Asphalt. Der während des Transportes typischerweise zähflüssige Asphalt ist klebrig und haftet deshalb gerne in der Mulde an, wenn keine entsprechenden Gegenmaßnahmen getroffen werden. Um Anhaftungen des Asphalts in der Mulde des Anhängers zu vermeiden, wird die Mulde traditionell vor jedem Einbringen von Asphalt mit einem Trennmittel besprüht. Das Besprühen der Mulde bzw. des von der Mulde aufgespannten Laderaumes mit dem Trennmittel erfolgt traditionell durch eine Bedienperson; für die Bedienperson ist dies jedoch aus den folgenden Gründen nicht ungefährlich:
1. Zum einen muss die Bedienperson zunächst von außen an der Wandung des Anhängers hochsteigen, dann dessen Brüstung übersteigen und dann in das Innere der Mulde absteigen. Dieser Klettervorgang ist regelmäßig nicht ungefährlich, insbesondere bei Regenwetter besteht Rutschgefahr.
2. Das Einsprühen der Innenseite der Mulde mit dem Trennmittel erfolgt typischerweise mit Hilfe einer Handpumpe. Während des Aufsprühens wird die Bedienperson von dem Trennmittel eingenebelt und die Bedienperson ist insofern dem in der Regel giftigen Trennmittel oder dessen Dämpfen unmittelbar ausgesetzt. Insofern besteht ein erhebliches Gesundheitsrisiko für die Bedienperson.

Die internationale Patentanmeldung WO03/066395 A1 offenbart einen Anhänger für eine Zugmaschine mit den Merkmalen des Oberbegriffs des Patentanspruchs 1. Konkret offenbart diese Druckschrift eine auf einem Chassis kippbar gelagerte Mulde, welche einen Laderaum aufspannt zur Aufnahme von Schüttgut. An dem Anhänger bzw. der Mulde ist ein Tank für eine Flüssigkeit angebracht. Weiterhin ist eine Pumpvorrichtung vorgesehen zum Pumpen der Flüssigkeit aus dem Tank durch eine Flüssigkeitsleitung zu einer Düse, welche die Flüssigkeit auf die Innenseite der Mulde versprüht.

Ausgehend von diesem Stand der Technik liegt der Erfindung die Aufgabe zugrunde, einen bekannten Anhänger in Form eines Kippers sowie einen LKW mit einem solchen Anhänger dahingehend weiterzubilden, dass das Aufbringen des Trennmittels für eine Bedienperson gefahrlos möglich wird.

Diese Aufgabe wird für den Anhänger durch den Gegenstand des Anspruchs 1 gelöst.

Die beanspruchten technischen Elemente ermöglichen durch ihr Zusammenwirken vorteilhafterweise, dass die Flüssigkeit, d. h. das Trennmittel, nicht mehr unmittelbar durch eine Bedienperson an der Innenseite der Mulde aufgebracht werden muss, sondern dass dieser Vorgang auf Anweisung der Bedienperson automatisch ablaufen kann. Die Bedienperson muss die Pumpeinrichtung lediglich einschalten; dann erfolgt das Aufbringen der Flüssigkeit automatisch. Vorteilhafterweise kann sich die Bedienperson dann während des Aufbringens der Flüssigkeit auf die Innenseite der Mulde entfernt von der Mulde aufhalten und ist deshalb nicht mehr den aus dem Stand der Technik bekannten Gefahren ausgesetzt. Insbesondere bedarf es keines Hineinkletterns in die Mulde und keines direkten Kontaktes mehr mit der Flüssigkeit bzw. dem Trennmittel.

Der Begriff "Innenseite" der Mulde meint die Seiten der Wände und des Bodens der Mulde, welche den Laderaum aufspannen bzw. dem Laderaum zugewandt sind.

Die Steuereinrichtung ist ausgebildet, im Falle einer Freischaltung bzw. Einschaltung der Pumpeinrichtung deren Einschaltzeit auf eine vorgegebene Zeitdauer zeitlich zu begrenzen. In dieser Zeit wird dann die Flüssigkeit mit Hilfe der Düsen an den Innenseiten der Mulde aufgesprüht.

Gemäß einem ersten Ausführungsbeispiel handelt es sich bei dem Schüttgut zum Beispiel um Asphalt und bei der Flüssigkeit um ein vorzugsweise abbaubares Trennmittel für den Asphalt, um ein Anhaften des Asphalts an der Innenseite der Mulde zu verhindern.

Der Begriff "Asphalt" steht in der vorliegenden Beschreibung alternativ oder zusätzlich auch für Bitumen.

Alternativ kann es sich bei der Flüssigkeit auch um ein Feuerlöschmittel, wie z.B. um Löschschaum oder Pulver handeln. Die Düsen können dann auch bei Gefahrguttransporten mit brennbaren Schüttgütern als Löschvorrichtung zum Löschen von brennendem Schüttgut verwendet werden.

Gemäß einem weiteren Ausführungsbeispiel ist der Tank für die Flüssigkeit an dem Chassis befestigt und die Flüssigkeitsleitung ist im Bereich der Schwenkachse vorzugsweise flexibel ausgebildet und zu der Mulde hingeführt. Die flexible Ausbildung der Flüssigkeitsleitung im Bereich der Schwenkachse ist erforderlich, damit die Flüssigkeitsleitung die Kippbewegungen der Mulde mitmachen kann, ohne dabei eine Materialermüdung zu erleiden bzw. zu brechen.

Das Führen der Flüssigkeitsleitung durch ein Hohlprofil an der Oberkante der Mulde bietet den Vorteil, dass die Flüssigkeitsleitung in dem Hohlprofil geschützt geführt ist. Insbesondere besteht dann nicht die Gefahr, dass die Flüssigkeitsleitung in dem rauen Alltag eines Anhängers von herabfallendem Schüttgut getroffen und beschädigt wird.

Eine ähnliche Funktion hat ein über der Düse angeordnetes Schutzblech, welches in den Laderaum der Mulde hineinragt. Auch das Schutzblech verhindert, dass die in den Laderaum hineinragende Düse durch herabfallendes Schüttgut beschädigt wird.

Der Düse kann eine Verfahreinrichtung zugeordnet sein zum Verfahren der Düse in den Laderaum der Mulde hinein zum Aufbringen der Flüssigkeit und zum Verfahren der Düse aus dem Laderaum heraus, wenn das Aufbringen der Flüssigkeit beendet wurde. Wenn eine solche Verfahreinrichtung vorhanden ist, ist das besagte Schutzblech typischerweise entbehrlich, weil die Düse, wenn sie aus dem Laderaum herausgefahren ist, durch herabfallendes Schüttgut nicht mehr beschädigt werden kann.

Die Verfahreinrichtung weist vorteilhafterweise einen Drucksensor auf zum Erfassen, ob der Druck der der Düse zugeführten Flüssigkeit einen den vorgegebenen Druckschwellenwert übersteigt oder nicht. Die vorzugsweise elektrisch betriebene Verfahreinrichtung ist dann vorteilhafterweise so ausgebildet, dass sie die Düse selbsttätig in den Laderaum hinaus ausfährt, wenn der Druck der Flüssigkeit den vorgegebenen Druckschwellenwert übersteigt. Alternativ fährt die Verfahreinrichtung die Düse selbsttätig aus dem Laderaum heraus, wenn der Druck der Flüssigkeit den Druckschwellenwert unterschreitet. Auch die Verfahreinrichtung kann durch das im vorherigen Absatz beschriebene Schutzblech geschützt werden.

Zum Ein- und Ausschalten der Pumpeinrichtung ist ein Ein- und Ausschalter vorgesehen. Je nach Schaltstellung des Ein- und Ausschalters bewirkt eine Steuereinrichtung das Ein- oder Ausschalten der Pumpeinrichtung und damit das Fördern bzw. Nicht-Fördern der Flüssigkeit.

Der Ein- und Ausschalter kann beispielsweise am Chassis des Anhängers angebracht sein zur manuellen Bedienung durch die Bedienperson. Dem Ein- und Ausschalter kann eine Fernsteuerung bzw. Fernbedienung beispielsweise in Form eines Computers oder Smartphones zugeordnet sein, welche ausgebildet ist, den Ein- und Ausschalter an dem Anhänger über eine Kabelverbindung, per Funk oder über ein mobiles Telefonnetz oder über das Internet ein- und auszuschalten.

Die oben genannte Aufgabe wird bezüglich des LKW durch den Gegenstand des Patentanspruchs 20 gelöst. Die Vorteile dieser Lösung entsprechen den oben mit Bezug auf die aus dem Anhänger genannten Vorteilen.

Weitere vorteilhafte Ausgestaltungen des Anhängers und insbesondere von dessen Steuereinrichtung sowie des LKW sind Gegenstand der abhängigen Ansprüche.

Der Beschreibung sind vier Figuren beigefügt, wobei
- Figur 1: einen LKW mit dem erfindungsgemäßen Anhänger;
- Figur 2: eine Draufsicht auf die Mulde des Anhängers;
- Figur 3: eine Detailansicht zur Befestigung der Düse an der Innenseite der Mulde; und
- Figur 4: den erfindungsgemäßen Anhänger in fester Verbindung mit einer Zugmaschine
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

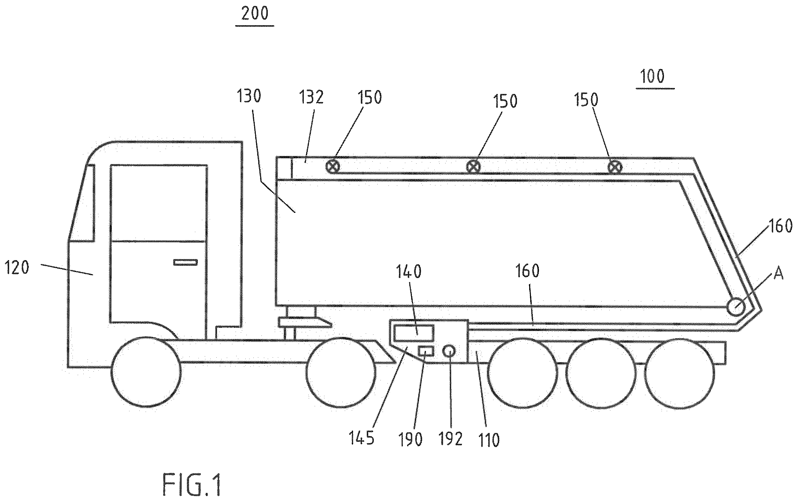

In Figur 1 ist der erfindungsgemäße Anhänger 100 gezeigt. Er weist ein Chassis 110 auf sowie einen auf dem Chassis um eine Schwenkachse A kippbar gelagerten Aufbau 130. Der Aufbau 130 ist in Form einer Mulde ausgebildet, welcher einen Laderaum aufspannt zur Aufnahme von Schüttgut.

Bei dem Schüttgut kann es sich beispielsweise um Asphalt handeln.

Erfindungsgemäß ist ein Tank 140 für eine Flüssigkeit beispielsweise an dem Chassis 110 befestigt. Vorzugsweise an der Oberkante 132 der Mulde 130 sind Düsenhalter 153 angeordnet zum Aufnehmen bzw. Halten von Düsen 150. Sofern keine Verfahreinrichtung für die Düsenhalter bzw. Düsen vorgesehen ist, sind die Düsenhalter an die Muldenwand zum Beispiel angeschweißt oder verschraubt. Die Düsen 150 sind über eine Flüssigkeitsleitung 160 mit dem Tank 140 verbunden. Wie in Figur 1 zu erkennen ist, ist die Flüssigkeitsleitung 160 im Bereich der Schwenkachse A von dem Chassis 110 zu der Mulde 130 und den Düsen 150 geführt. Damit die Flüssigkeitsleitung 160 im Bereich der Schwenkachse A nicht auf Dauer aufgrund der durchgeführten Kippbewegungen bricht, ist die Flüssigkeitsleitung zumindest im Bereich der Schwenkachse A vorzugsweise flexibel, z. B. als Schlauch ausgebildet. Entlang ihrer sonstigen Weglänge kann die Flüssigkeitsleitung entweder als Schlauch oder als Rohrleitung ausgebildet sein.

Die Oberkante 132 der Mulde 130 ist typischerweise als Hohlprofil, beispielsweise mit rechteckförmigem Querschnitt ausgebildet. Dann ist es vorteilhaft, die Flüssigkeitsleitung 160 in dem Hohlprofil zu den Düsen 150 zu führen, denn durch das Hohlprofil ist die Flüssigkeitsleitung vor mechanischer Beschädigung, beispielsweise durch herabfallendes Schüttgut, geschützt. Weiterhin ist in Figur 1 ein Ein- und Ausschalter 192 zu erkennen zum Ein- oder Ausschalten der Pumpeinrichtung 170 mit Hilfe einer Steuereinrichtung 190. Die Steuereinrichtung schaltet die Pumpeinrichtung 170 an je nach Schaltstellung des Ein- und Ausschalters 192.

Für das Einschalten der Pumpeinrichtung können neben der Ein-Stellung des Ein- und Ausschalters weiter Freigabebedingungen erforderlich sein, die weiter unten beschrieben sind.

Der Anhänger 100 ist in Figur 1 beispielhaft als Sattelauflieger als Teil eines Sattelzugs gezeigt, wobei der Sattelzug neben dem Anhänger 100 auch eine Zugmaschine 120 mit umfasst.

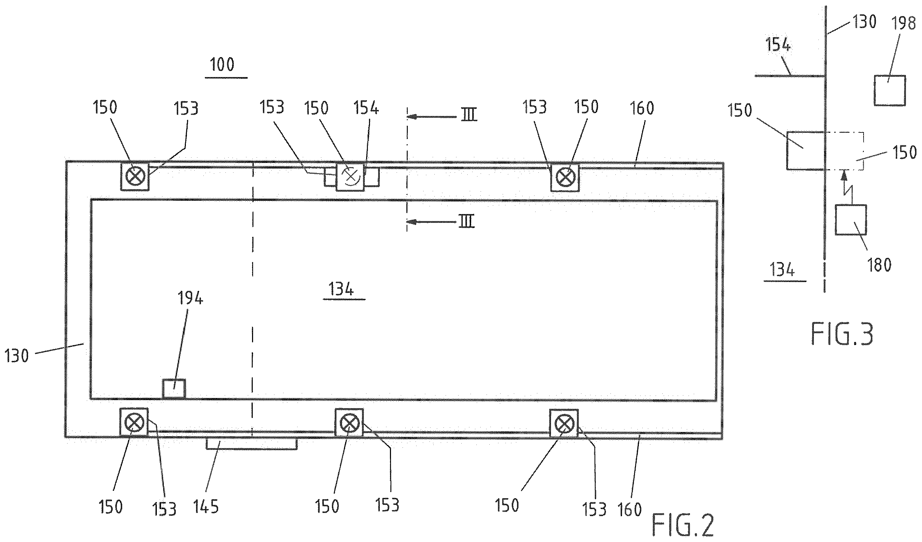

Figur 2 zeigt eine Draufsicht auf die Mulde 130 des Anhängers 100. Zu erkennen sind jeweils drei Düsen 150 an jeder der Längsseiten der Mulde. Die Düsenreihen auf jeder Längsseite der Mulde werden bei dem in Figur 2 gezeigten Ausführungsbeispiel jeweils über individuell zugeordnete Flüssigkeitsleitungen 160 versorgt, die entweder getrennt oder nach erfolgter Zusammenführung mit der Pumpeinrichtung 170 und dem Tank 140 verbunden sind.

In Figur 2 ist weiterhin ein erster Sensor 194 zu erkennen, welcher den Laderaum 134 der Mulde dahingehend überwacht, ob dieser leer ist oder nicht. Die Steuereinrichtung 190 kann ausgebildet sein, die Pumpeinrichtung 170 nur dann zur Einschaltung freizugeben, wenn die Mulde leer ist. Dies macht insbesondere dann Sinn, wenn die Düse zur Aufbringung eines Trennmittels auf die Innenseite der Mulde dient; dies muss zwingend notwendig erfolgen, solange die Mulde noch leer ist und erst danach darf z. B. der zähflüssige klebrige Asphalt eingefüllt werden.

In der Draufsicht gemäß Figur 2 ist außerdem ein Schutzblech 154 zu erkennen, welches eine darunter angeordnete Düse 150 vor eventuell herabfallendem Schüttgut schützt.

Dies ist in Figur 3 genauer dargestellt. Es ist zu erkennen, dass das Schutzblech 154 an der Wand der Mulde 130 oberhalb der in den Laderaum 134 hineinragenden Düse 150 angeordnet ist. Alternativ oder zusätzlich zu dem Schutzblech 154 kann eine Verfahreinrichtung 180 für die Düse vorgesehen sein. Diese vorzugsweise elektrisch betreibbare Verfahreinrichtung ist ausgebildet, die Düse 150, vorzugsweise zusammen mit dem Düsenhalter 153, in den Laderaum 134 auszufahren; diese ausgefahrene Position der Düse 150 ist in Figur 3 mit einer durchgezogenen Linie für die Düse 150 gekennzeichnet. Weiterhin ist die Verfahreinrichtung 180 ausgebildet, die Düse 150, gegebenenfalls mit ihrem Düsenhalter 153, aus dem Laderaum 132 heraus, vorzugsweise in das Innere der Wand der Mulde hinein zu verfahren; diese eingefahrene Position der Düse ist in Figur 3 mit dem Bezugszeichen 150' und mit gestrichelter Linienführung für die Düse gekennzeichnet. Der Düsenhalter 153 ist beispielsweise aus Metall, vorzugsweise Stahl oder Aluminium, gebildet. Die Verfahreinrichtung kann ausgebildet sein, die Düse im Ansprechen auf den Druck der Flüssigkeit in der Flüssigkeitsleitung 160 bzw. in der Düse 150 zu verfahren. Konkret kann die Verfahreinrichtung 180 ausgebildet sein, die Düse 150 selbsttätig in den Laderaum hinein auszufahren, wenn der Druck der Flüssigkeit einen vorgegeben Druckschwellenwert übersteigt. Andererseits kann die Verfahreinrichtung 180 ausgebildet sein, die Düse 150 aus dem Laderaum heraus in die in Figur 3 gezeigte Ruheposition zu verfahren, wenn der Druck der Flüssigkeit den Druckschwellenwert unterschreitet.

In Figur 3 ist weiterhin ein dritter Sensor 198 zu erkennen, welcher ausgebildet ist, zu erfassen, ob die Düse 150 in den Laderaum ausgefahren ist oder nicht. Die Steuereinrichtung 190 ist vorzugsweise ausgebildet, die Pumpeinrichtung 170 nur dann zur Einschaltung freizugeben, wenn die Düse 150 in den Laderaum 132 ausgefahren ist. Auf diese Weise wird sichergestellt, dass die Flüssigkeit tatsächlich nur in die Mulde 130, insbesondere nur auf deren Innenseiten gesprüht wird.

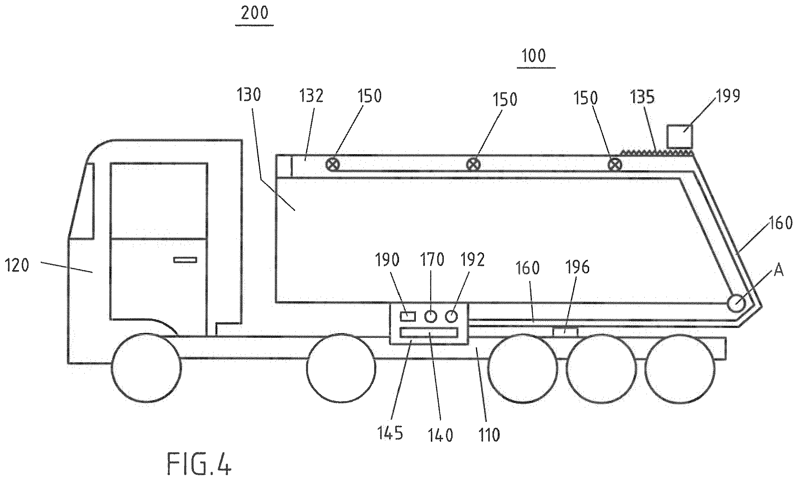

Figur 4 zeigt den erfindungsgemäßen Anhänger 100 in einteiliger Ausbildung mit der Zugmaschine 120; zusammen bilden die Zugmaschine und der mit der Zugmaschine fest verbundene Anhänger insofern einen zusammenhängenden Lastkraftwagen. Der Anhänger 100 und die Fahrerkabine 120 sind vorzugsweise auf einem gemeinsamen Chassis 110 aufgebaut. Dies ist jedoch für die erfindungsgemäße Ausgestaltung des Anhängers unerheblich.

In Figur 4 ist gezeigt, dass der Anhänger 100 bzw. der LKW 200 - beispielsweise an seinem Chassis angeordnet - einen zweiten Sensor 196 in Form eines Endschalters aufweisen kann zum Erfassen, ob sich die Mulde 130 in einer abgesenkten oder in einer hochgestellten, d. h. gekippten Position befindet. Die Steuereinrichtung 190 kann dann so ausgebildet sein, dass sie die Pumpeinrichtung 170 nur dann zur Einschaltung freigibt, wenn sich die Mulde in der abgesenkten Position befindet.

Die Mulde 130 kann ein Dach 135, beispielsweise ein Faltdach, aufweisen, welches vorzugsweise elektronisch geöffnet oder geschlossen werden kann. In Verbindung mit dem Dach 135 kann ein vierter Sensor 199 vorgesehen sein zum Erfassen, ob das Dach jeweils zu einem bestimmten Zeitpunkt geöffnet oder geschlossen ist. Die Steuereinrichtung 190 kann dann ausgebildet sein, die Pumpeinrichtung 170 nur dann zur Einschaltung freizugeben, wenn das Dach geöffnet ist. Dies ist deshalb sinnvoll, weil beim Aufbringen des Trennmittels oftmals schädliche bzw. gesundheitsschädliche Dämpfe entstehen, die vorteilhafterweise über das geöffnete Dach entweichen können.

Für das Einschalten der Pumpeinrichtung 170 ist deren Einschaltung über den Ein- und Ausschalter 192 immer zwingend notwendig; das Vorliegen einer weiteren Freigabebedingung kann in Abhängigkeit der Signale der Sensoren 194 - 199 zusätzlich gefordert sein. Konkret kann dies bedeuten, dass die Pumpeinrichtung von der Steuereinrichtung 190 lediglich dann freigegeben wird, wenn sie über den Ein- und Ausschalter 192 eingeschaltet ist und zusätzlich keine oder mindestens eine der zuvor genannten Freigabebedingungen erfüllt ist. Die Steuereinrichtung 190 ist ausgebildet, im Falle einer Freischaltung bzw. Einschaltung der Pumpeinrichtung deren Einschaltzeit auf eine vorgegebene Zeitdauer, beispielsweise 20 - 60 Sekunden, zeitlich zu begrenzen. In dieser Zeit wird dann die Flüssigkeit mit Hilfe der Düsen 150 an den Innenseiten der Mulde 130 aufgesprüht.

Die Pumpeinrichtung kann mit Strom aus einer Batterie, beispielsweise der LKW-Batterie oder mit Hilfe von Druckluft, wie sie auch von dem LKW bereitgestellt wird, betrieben werden.

Die Pumpeinrichtung 170, der Tank 140 sowie vorzugsweise auch ein Filter für die Flüssigkeit sowie optional auch die Steuereinrichtung 190 sind vorzugsweise in einem gemeinsamen Gehäuse 145 untergebracht. Das Gehäuse 145 dient insbesondere zum Schutz seines Inhaltes vor Verschrnutzung und Zerstörung. Vorzugsweise ist das Gehäuse 145 aus Aluminium gefertigt.

Der Tank 140 kann einen Nachfüllstutzen aufweisen zum Nachfüllen der Flüssigkeit von außen durch eine Bedienperson.

Die Düse 150 oder zumindest deren Sprühkopf sind vorzugsweise austauschbar ausgebildet, um im Verschleißfalle schnell und preisgünstig gewechselt werden zu können.

Der Ein- und Ausschalter 192 kann auch in der Fahrerkabine 120 angeordnet sein.

Sämtliche zuvor unter Bezugnahme auf die Figuren 1 bis 4 beschriebenen Ausführungsbeispiele für den Anhänger 100 gelten unabhängig davon, ob der Anhänger alleine oder in fester oder lösbarer Verbindung mit einer Zugmaschine betrachtet wird.

### Bezugszeichenliste

- 100: Anhänger
- 110: Chassis
- 120: Zugmaschine
- 130: Aufbau bzw. Mulde
- 132: Oberkante der Mulde
- 134: Laderaum
- 135: Dach der Mulde
- 140: Tank
- 145: Gehäuse
- 150: Düse
- 153: Düsenhalter
- 154: Schutzblech
- 160: Flüssigkeitsleitung
- 170: Pumpeinrichtung
- 180: Verfahreinrichtung
- 190: Steuereinrichtung
- 192: Ein- und Ausschalter für die Pumpeinrichtung
- 194: erster Sensor
- 196: zweiter Sensor
- 198: dritter Sensor
- 199: vierter Sensor
- 200: Lastkraftwagen "LKW"

## Patentansprüche

1. Anhänger (100) in Form eines Kippers für eine Zugmaschine, aufweisend ein Chassis (110),
einen auf dem Chassis (110) um eine Schwenkachse (A) kippbar gelagerten Aufbau (130) in Form einer Mulde, weiche einen Laderaum (134) aufspannt zur Aufnahme von Schüttgut,
einen an dem Anhänger (100) angeordneten Tank (140) für eine Flüssigkeit;
mindestens eine an der Innenseite der Mulde (130) angeordnete Düse (150) zum Aufbringen der Flüssigkeit auf die Innenseite;
eine Flüssigkeitsleitung (160) zwischen dem Tank (140) und der Düse (150); und
eine Pumpeinrichtung (170) zum Pumpen der Flüssigkeit aus dem Tank (140) durch die Flüssigkeitsleitung (160) zu der Düse (150), **gekennzeichnet durch**
mindesten einen Ein- und Ausschalter (192); und
eine Steuereinrichtung (190) zum Ein-oder Ausschalten der Pumpeinrichtung (170) im Ansprechen auf eine jeweilige Schaltstellung des Ein- und Ausschalters (192), wobei die Steuereinrichtung (190) ausgebildet ist, die Einschaltzeit für die Pumpeinrichtung (170) auf eine vorgegebene Zeitdauer zeitlich zu begrenzen.

2. Anhänger (100) nach Anspruch 1,
**dadurch gekennzeichnet,**
**dass** es sich bei dem Schüttgut um Asphalt oder Bitumen und bei der Flüssigkeit um ein vorzugsweise biologisch abbaubares Trennmittel handelt, um ein Anhaften des Asphalts an der Innenseite der Mulde zu verhindern.

3. Anhänger (100) nach einem der vorangegangenen Ansprüche,
**dadurch gekennzeichnet,**
**dass** der Tank (140) an dem Chassis (110) befestigt und die Flüssigkeitsleitung (160) im Bereich der Schwenkachse vorzugsweise flexibel ausgebildet und zu der Düse (150) geführt ist.

4. Anhänger (100) nach einem der vorangegangenen Ansprüche,
**dadurch gekennzeichnet,**
**dass** die Oberkante (132) der Mulde (130) durch ein Hohlprofil mit beispielsweise rechteckförmigem Querschnitt gebildet ist; und dass die Flüssigkeitsleitung (160) in dem Hohlprofil geführt ist.

5. Anhänger (100) nach einem der vorangegangenen Ansprüche,
**gekennzeichnet durch**
ein oberhalb der Düse (150) angeordnetes Schutzblech (154), welches in den Laderaum (132) hineinragt.

6. Anhänger (100) nach einem der vorangegangenen Ansprüche,
**gekennzeichnet durch**
eine vorzugsweise elektrisch betriebene Verfahreinrichtung (180) zum Verfahren der Düse (150) in den Laderaum (134) hinein zum Aufbringen der Flüssigkeit und zum Verfahren der Düse aus dem Laderaum heraus nach dem Aufbringen der Flüssigkeit.

7. Anhänger (100) nach Anspruch 6,
**dadurch gekennzeichnet,**
**dass** die Verfahreinrichtung (180) ausgebildet ist die Düse (150) selbsttätig in den Laderaum (134) hinein auszufahren, wenn der Druck der Flüssigkeit einen vorgegebenen Druckschwellenwert übersteigt, und die Düse aus dem Laderaum heraus zu verfahren, wenn der Druck der Flüssigkeit den Druckschwellenwert unterschreitet.

8. Anhänger (100) nach Anspruch 1,
**dadurch gekennzeichnet,**
**dass** der Ein- und Ausschalter (192) zur vorzugsweise manuellen Bedienung durch eine Bedienperson am Chassis (110) des Anhängers angeordnet ist; und
**dass** dem Ein- und Ausschalter vorzugsweise eine Fernsteuerung bzw. Fernbedienung beispielsweise in Form eines Computers oder Smartphones zugeordnet ist, welche ausgebildet ist, den Ein- und Ausschalter an dem Anhänger über eine Kabelverbindung, per Funk oder über ein mobiles Telefonnetz oder über das Internet ein- und auszuschalten.

9. Anhänger (100) nach einem der Ansprüche 1 oder 8,
**dadurch gekennzeichnet,**
**dass** ein erster Sensor (194) vorgesehen ist zum Erfassen, ob der Laderaum (134) der Mulde (130) leer ist; und
**dass** die Steuereinrichtung (190) ausgebildet ist, die Pumpeinrichtung (170) nur dann zur Einschaltung freizugeben, wenn die Mulde (130) leer ist.

10. Anhänger (100) nach einem der Ansprüche 8 oder 9,
**dadurch gekennzeichnet,**
**dass** ein zweiter Sensor (196) in Form eines Endschalters vorgesehen ist zum Erfassen, ob sich die Mulde (130) in einer abgesenkten oder gekippten Position befindet; und
**dass** die Steuereinrichtung (190) ausgebildet ist, die Pumpeinrichtung (170) nur dann zur Einschaltung freizugeben, wenn sich die Mulde in der abgesenkten Position befindet.

11. Anhänger (100) nach einem der Ansprüche 6 oder 7 und 8 bis 10,
**dadurch gekennzeichnet,**
**dass** ein dritter Sensor (198) vorgesehen ist zum Erfassen, ob die Düse (150) in den Laderaum (134) ausgefahren ist; und
**dass** die Steuereinrichtung (190) ausgebildet ist, die Pumpeinrichtung (170) nur dann zur Einschaltung freizugeben, wenn die Düse (150) in den Laderaum (134) ausgefahren ist.

12. Anhänger (100) nach einem der Ansprüche 8 bis 11,
**dadurch gekennzeichnet,**
**dass** die Mulde ein Dach (135) aufweist, welches zu öffnen oder verschließbar ist;
**dass** ein vierter Sensor (190) vorgesehen ist zum Erfassen, ob das Dach (135) geöffnet oder geschlossen ist; und
**dass** die Steuereinrichtung (190) ausgebildet ist, die Pumpeinrichtung (170) nur dann zur Einschaltung freizugeben, wenn das Dach (135) geöffnet ist.

13. Anhänger (100) nach einem der vorangegangenen Ansprüche,
**dadurch gekennzeichnet,**
**dass** die Pumpeneinrichtung (170) mit Strom aus einer Batterie, mit beispielsweise 12V oder 24V Nennspannung, oder mit Druckluft betreibbar ausgebildet ist.

14. Anhänger (100) nach einem der vorangegangenen Ansprüche,
**dadurch gekennzeichnet,**
**dass** die Pumpeneinrichtung (170), der Tank (140) sowie vorzugsweise auch ein Filter für die Flüssigkeit in einem gemeinsamen Gehäuse (145) oder in separaten Gehäusen, die vorzugsweise aus Aluminium gefertigt sind, angeordnet sind.

15. Anhänger (100) nach einem der vorangegangenen Ansprüche,
**dadurch gekennzeichnet,**
**dass** der Tank (140) einen Nachfüllstutzen aufweist zum Nachfüllen der Flüssigkeit.

16. Anhänger (100) nach einem der vorangegangenen Ansprüche,
**dadurch gekennzeichnet,**
**dass** die Düse (150) oder zumindest deren Sprühkopf austauschbar ausgebildet ist.

17. Anhänger (100) nach einem der vorangegangenen Ansprüche,
**dadurch gekennzeichnet,**
**dass** eine Mehrzahl von Düsen (150), beispielsweise 1 bis 5 Stück pro Längsseite, am oberen Rand der Mulde (130) verteilt angeordnet ist.

18. Lastkraftwagen (200) aufweisend eine Zugmaschine (120) und einen mit der Zugmaschine verbindbaren Anhänger,
**dadurch gekennzeichnet,**
**dass** der Anhänger (100) ausgebildet ist nach einem der vorangegangenen Ansprüche.

19. Lastkraftwagen (200) nach Anspruch 18,
**dadurch gekennzeichnet,**
**dass** der Ein- und Ausschalter (192) in der Fahrerkabine der Zugmaschine angeordnet ist.

20. Lastkraftwagen (200) nach Anspruch 18 oder 19,
**dadurch gekennzeichnet,**
**dass** der Lastkraftwagen (200) als Sattelzug und der Anhänger (100) als Sattelauflieger ausgebildet ist.

21. Lastkraftwagen (200) nach einem der Ansprüche 18 oder 19,
**dadurch gekennzeichnet,**
**dass** die Zugmaschine (120) und der Anhänger (100) als ein zusammenhängender Lastkraftwagen mit einem gemeinsamen Chassis ausgebildet sind, wobei der Anhänger beispielsweise als Kastenaufbau auf dem Chassis ausgebildet ist.

## Claims

1. A trailer (100) in the form of a dumper for a tractor, comprising a chassis (110),
a body (130) in the form of a trough, which is mounted on the chassis (110) so as to be tiltable about a pivoting axis (A) and defines a cargo space (134) for accommodating bulk material,
a tank (140) for a liquid, which is arranged on the trailer (100);
at least one nozzle (150), which is arranged on the inner side of the trough (130) and serves for applying the liquid to the inner side;
a liquid line (160) between the tank (140) and the nozzle (150); and
a pump device (170) for pumping the liquid from the tank (140) to the nozzle (150) through the liquid line (160),
**characterized by**
at least one on/off switch (192); and
a control device (190) for switching the pump device (170) on or off in response to a respective switching position of the on/off switch (192), wherein the control device (190) is designed for limiting the switch-on time for the pump device (170) to a predefined time period.

2. The trailer (100) according to claim 1,
**characterized in**
**that** the bulk material consists of asphalt or bitumen and the liquid consists of a preferably biodegradable separating agent for preventing the asphalt from adhering to the inner side of the trough.

3. The trailer (100) according to one of the preceding claims,
**characterized in**
**that** the tank (140) is mounted on the chassis (110), and in that the liquid line (160) preferably is realized flexibly in the region of the pivoting axis and leads to the nozzle (150).

4. The trailer (100) according to one of the preceding claims,
**characterized in**
**that** the upper edge (132) of the trough (130) is formed by a hollow profile, e.g. with rectangular cross section, and in that the liquid line (160) extends in the hollow profile.

5. The trailer (100) according to one of the preceding claims,
**characterized by**
a protective plate (154) that is arranged above the nozzle (150) and protrudes into the cargo space (132).

6. The trailer (100) according to one of the preceding claims,
**characterized by**
a displacement device (180) that is preferably operated electrically and serves for displacing the nozzle (150) into the cargo space (134) in order to apply the liquid, as well as for displacing the nozzle out of the cargo space after the application of the liquid.

7. The trailer (100) according to claim 6,
**characterized in**
**that** the displacement device (180) is designed for automatically extending the nozzle (150) into the cargo space (134) when the pressure of the liquid exceeds a predefined pressure threshold value, as well as for retracting the nozzle from the cargo space when the pressure of the liquid falls short of the pressure threshold value.

8. The trailer (100) according to claim 1,
**characterized in**
**that** the on/off switch (192) is arranged on the chassis (110) of the trailer for the preferably manual operation by an operator, and
in that a remote control, e.g. in the form of a computer or smartphone, preferably is assigned to the on/off switch and designed for switching the on/off switch on the trailer on and off via a cable connection, via radio or via a mobile telephone network or the Internet.

9. The trailer (100) according to one of claims 1 or 8,
**characterized in**
**that** a first sensor (194) is provided for detecting whether the cargo space (134) of the trough (130) is empty; and
in that the control device (190) is designed for only allowing the pump device (170) to be switched on when the trough (130) is empty.

10. The trailer (100) according to one of claims 8 or 9,
**characterized in**
**that** a second sensor (196) in the form of a limit switch is provided for detecting whether the trough (130) is in a lowered or tilted position, and
in that the control device (190) is designed for only allowing the pump device (170) to be switched on when the trough is in the lowered position.

11. The trailer (100) according to one of claims 6 or 7 and 8 to 10,
**characterized in**
**that** a third sensor (198) is provided for detecting whether the nozzle (150) is extended into the cargo space (134); and
in that the control device (190) is designed for only allowing the pump device (170) to be switched on when the nozzle (150) is extended into the cargo space (134) .

12. The trailer (100) according to one of claims 8 to 11,
**characterized in**
**that** the trough comprises a roof (135), which can be opened or closed;
in that a fourth sensor (190) is provided for detecting whether the roof (135) is opened or closed; and
in that the control device (190) is designed for only allowing the pump device (170) to be switched on when the roof (135) is opened.

13. The trailer (100) according to one of the preceding claims,
**characterized in**
**that** the pump device (170) is designed for being operated with the current of a battery, for example with a nominal voltage of 12V or 24V, or with compressed air.

14. The trailer (100) according to one of the preceding claims,
**characterized in**
**that** the pump device (170), the tank (140) and preferably also a filter for the liquid are arranged in a common housing (145) or in separate housings, which are preferably made of aluminum.

15. The trailer (100) according to one of the preceding claims,
**characterized in**
**that** the tank (140) comprises a refill fitting for refilling the liquid.

16. The trailer (100) according to one of the preceding claims,
**characterized in**
**that** the nozzle (150) or at least its spray head is realized in an exchangeable manner.

17. The trailer (100) according to one of the preceding claims,
**characterized in**
**that** a plurality of nozzles (150), for example 1 to 5 nozzles per longitudinal side, are arranged on the upper edge of the trough (130) in a distributed manner.

18. A heavy goods vehicle (200) comprising a tractor (120) and a trailer that can be connected to the tractor,
**characterized in**
**that** the trailer (100) is realized in accordance with one of the preceding claims.

19. The heavy goods vehicle (200) according to claim 18,
**characterized in**
**that** the on/off switch (192) is arranged in the driver's cab of the tractor.

20. The heavy goods vehicle (200) according to claim 18 or 19,
**characterized in**
**that** the heavy goods vehicle (200) is realized in the form of a semitruck and the trailer (100) is realized in the form of a semitrailer.

21. The heavy goods vehicle (200) according to one of claims 18 or 19,
**characterized in**
**that** the tractor (120) and the trailer (100) are realized in the form of a connected heavy goods vehicle with a common chassis, wherein the trailer is realized, for example, in the form of a box body on the chassis.

## Revendications

1. Remorque (100) sous la forme d'un basculeur, destinée à un tracteur, comportant un châssis (110),
une superstructure (130) logée de manière basculante autour d'un axe de pivotement (A) sur le châssis (110), sous la forme d'une benne, laquelle définit un espace de chargement (134) destiné à recevoir des produits en vrac,
un réservoir (140) placé sur la remorque (100), destiné à recevoir un liquide ;
au moins une buse (150) placée sur la face intérieure de la benne (130), destinée à appliquer le liquide sur la face intérieure ;
un conduit de liquide (160) entre le réservoir (140) et la buse (150) ; et
un système de pompe (170), destiné à pomper le liquide hors du réservoir (140) à travers le conduit de liquide (160) vers la buse (150),
**caractérisé par**
au moins un interrupteur marche et arrêt (192) ; et
un système de commande (190), destiné à mettre en marche et à l'arrêt le système de pompe (170), en réponse à une position de commutation respective de l'interrupteur marche et arrêt (192), le système de commande (190) étant conçu pour limiter à une période prédéfinie le temps de mise en marche pour le système de pompe (170).

2. Remorque (100) selon la revendication 1,
**caractérisée**
**en ce que** le produit en vrac est de l'asphalte ou du bitume et le liquide est un agent séparateur, de préférence biodégradable, destiné à empêcher une adhérence de l'asphalte sur la face intérieure de la benne.

3. Remorque (100) selon l'une quelconque des revendications précédentes,
**caractérisée**
**en ce que** le réservoir (140) est fixé sur le châssis (110) et le conduit de liquide (160) est conçu de préférence sous forme souple dans la zone de l'axe de pivotement et est tiré vers la buse (150).

4. Remorque (100) selon l'une quelconque des revendications précédentes,
**caractérisée**
**en ce que** l'arête supérieure (132) de la benne (130) est créée par un profilé creux, présentant une section transversale par exemple rectangulaire ; et en ce que le conduit de liquide (160) est tiré dans le profilé creux.

5. Remorque (100) selon l'une quelconque des revendications précédentes,
**caractérisée par**
une tôle protectrice (154) placée au-dessus de la buse (150), laquelle saillit dans l'espace de chargement (132) .

6. Remorque (100) selon l'une quelconque des revendications précédentes,
**caractérisée par**
un système de déplacement (180) à actionnement de préférence électrique, destiné à déplacer la buse (150) vers l'intérieur de l'espace de chargement (134), pour appliquer le liquide et à déplacer la buse hors de l'espace de chargement, après l'application du liquide.

7. Remorque (100) selon la revendication 6,
**caractérisée**
**en ce que** le système de déplacement (180) est conçu pour déployer automatiquement la buse (150) dans l'espace de chargement (134) lorsque la pression du liquide dépasse une valeur de pression seuil prédéfinie et pour déplacer la buse hors de l'espace de chargement, lorsque la pression du liquide n'atteint pas la valeur seuil.

8. Remorque {100) selon la revendication 1,
**caractérisée**
**en ce que** pour être commandé de préférence manuellement par un opérateur, l'interrupteur marche et arrêt (192) est placé sur le châssis (110) de la remorque ; et
**en ce qu'**à l'interrupteur marche et arrêt est associé(e) de préférence une télécommande ou un télécontrôle, par exemple sous la forme d'un ordinateur ou d'un smartphone, lequel est conçu pour mettre en marche et à l'arrêt l'interrupteur marche et arrêt sur la remorque, via une liaison filaire, par radio ou via un réseau de téléphonie mobile, ou via Internet.

9. Remorque (100) selon l'une quelconque des revendications 1 ou 8,
**caractérisée**
**en ce qu'**un premier capteur (194) est prévu pour détecter si l'espace de chargement (134) de la benne (130) est vide ; et
**en ce que** le système de commande (190) est conçu pour ne valider la mise en route du système de pompe (170) qu'une fois que la benne (130) est vide.

10. Remorque (100) selon l'une quelconque des revendications 8 ou 9,
**caractérisée**
**en ce qu'**un deuxième capteur (196) est prévu sous la forme d'un interrupteur de fin de course, pour détecter si la benne (130) se trouve dans une position abaissée ou basculée ; et
**en ce que** le système de commande (190) est conçu pour ne valider la mise en route du système de pompe (170) que lorsque la benne se trouve dans la position abaissée.

11. Remorque (100) selon l'une quelconque des revendications 6 ou 7 et de 8 à 10,
**caractérisée**
**en ce qu'**un troisième capteur (198) est prévu pour détecter si la buse (150) est déployée dans l'espace de chargement (134) ; et
**en ce que** le système de commande (190) est conçu pour ne valider la mise en route du système de pompe (170) que lorsque la buse (150) est déployée dans l'espace de chargement (134).

12. Remorque (100) selon l'une quelconque des revendications 8 à 11,
**caractérisée**
**en ce que** la benne comporte un toit (135) susceptible de s'ouvrir ou de se fermer,
**en ce qu'**un quatrième capteur (190) est prévu pour détecter si le toit (135) est ouvert ou fermé ; et
**en ce que** le système de commande (190) est conçu pour ne valider la mise en route du système de pompe (170) que lorsque le toit (135) est ouvert.

13. Remorque (100) selon l'une quelconque des revendications précédentes,
**caractérisée en ce que**
le système de pompe (170) est conçu pour être susceptible de fonctionner à l'aide de courant provenant d'une batterie, d'une tension nominale de par exemple 12V ou 24V ou par air comprimé.

14. Remorque (100) selon l'une quelconque des revendications précédentes,
**caractérisée**
**en ce que** le système de pompe (170), le réservoir (140), ainsi que de préférence également un filtre pour le liquide sont placés dans un carter (145) commun ou dans des carters séparés, qui sont fabriqués de préférence en aluminium.

15. Remorque (100) selon l'une quelconque des revendications précédentes,
**caractérisée**
**en ce que** le réservoir (140) comporte une tubulure de recharge, pour recharger du liquide.

16. Remorque (100) selon l'une quelconque des revendications précédentes,
**caractérisée**
**en ce que** la buse (150) ou au moins sa tête de pulvérisation est conçue en version interchangeable.

17. Remorque (100) selon l'une quelconque des revendications précédentes,
**caractérisée**
**en ce qu'**une pluralité de buses (150), par exemple de 1 à 5 pièces par côté longitudinal est placée en distribution sur le bord supérieur de la benne (130).

18. Camion (200) comportant un tracteur (120) et une remorque susceptible d'être reliée avec le tracteur,
**caractérisée**
**en ce que** la remorque (100) est conçue selon l'une quelconque des revendications précédentes.

19. Camion (200) selon la revendication 18,
**caractérisée**
**en ce que** l'interrupteur marche et arrêt (192) est placé dans la cabine de conduite du tracteur.

20. Camion (200) selon la revendication 18 ou 19,
**caractérisée**
**en ce que** le camion (200) est conçu sous la forme d'un tracteur de semi-remorque et la remorque (100) est conçue sous la forme de semi-remorque.

21. Camion (200) selon l'une quelconque des revendications 18 ou 19,
**caractérisée**
**en ce que** le tracteur (120) et la remorque (100) sont conçus sous la forme d'un camion cohérent, disposant d'un châssis commun, la remorque étant conçue par exemple sous la forme d'une superstructure en caisse sur le châssis.
